# DEMANDE DE BREVET EUROPEEN

(11) **EP 1 847 431 A1**
(43) Date de publication de la demande: **24.10.2007**
(21) Numéro de dépôt: 07007680.7
(22) Date de dépôt: 16.04.2007
(51) Int. Cl.: B60T 11/18, G05G 1/14, F16C 11/06, B60T 7/06, B60T 13/57

(54) **Servomoteur d'assistance pneumatique de freinage d'un véhicule et procédé de montage d'une tige de commande de frein associé**

(30) Priorité: 18.04.2006 FR 0603761
(71) Demandeur: ROBERT BOSCH GMBH, 70442 Stuttgart (DE)
(72) Inventeur: Maligne, Jean-Charles, 93300 Aubervilliers (FR); Richard, Philippe, 77500 Chelles (FR); Verbo, Ulysse, 08190 Sant Cugat (ES)
(74) Mandataire: Hurwic, Aleksander Wiktor

(57) **Abrégé**

Un servomoteur d'assistance pneumatique de freinage (1) d'un véhicule comporte un distributeur (3) destiné à recevoir une rotule (10) d'une tige de commande de frein (9) par l'intermédiaire d'une cavité (12). Cette cavité délimite une surface (14). Pour augmenter les performances d'un servomoteur tout en diminuant un coût de fabrication d'un tel servomoteur, l'invention prévoit de réaliser un moulage d'au moins une portion (16) de la surface de la cavité du distributeur sur une portion de surface correspondante d'une superficie formée par la rotule de la tige de commande de frein (9).

## Description

La présente invention concerne un servomoteur pneumatique d'assistance de freinage d'un véhicule et le procédé de montage d'une tige de commande frein à l'intérieur d'un tel servomoteur. L'invention a pour but d'augmenter les performances obtenues par un tel servomoteur tout en diminuant son coût de fabrication. L'invention concerne plus particulièrement le domaine de l'automobile mais peut également s'appliquer dans d'autres domaines.

Un servomoteur .pneumatique d'assistance de freinage d'un véhicule est situé habituellement entre une pédale de frein du véhicule et un maître cylindre d'un circuit hydraulique de freinage. Le servomoteur d'assistance pneumatique de freinage permet de transformer un appui d'un pied d'un conducteur sur une pédale de frein en une pression amplifiée pneumatiquement. Cette pression amplifiée pneumatiquement est destinée à freiner le véhicule. De ce fait, le servomoteur permet de soulager notablement un effort fourni par le conducteur lorsqu'il appuie sur la pédale de frein.

Il existe plusieurs types de servomoteurs pneumatiques d'assistance de freinage. Notamment, il existe des servomoteurs pneumatiques d'assistance de freinage simple. Ces servomoteurs pneumatiques d'assistance de freinage simple comportent essentiellement depuis une pédale de frein jusqu'au maître cylindre du véhicule, une chambre arrière et une chambre avant. Mais il existe également des servomoteurs pneumatiques d'assistance de freinage tandem comportant une première chambre avant et une première chambre arrière montées en série avec une deuxième chambre avant et une deuxième chambre arrière.

Dans le cas des servomoteurs pneumatique d'assistance de freinage simple, la chambre avant comporte un volume variable et est séparée de la chambre arrière également à volume variable par une cloison formée par une membrane étanche et souple et par une plaque jupe rigide. La jupe rigide entraîne un piston pneumatique prenant appui, par l'intermédiaire d'une tige de poussée, sur un piston primaire du maître cylindre. La chambre avant est reliée pneumatiquement à une source de vide. La chambre arrière est reliée pneumatiquement, de manière contrôlée par une valve d'admission de fluide, à une source de fluide propulseur, typiquement de l'air sous pression atmosphérique.

Le servomoteur comporte un distributeur destiné à recevoir une tige de commande de frein. Plus particulièrement, le distributeur est creusé d'une cavité, laquelle cavité étant destinée à recevoir cette tige de commande de frein. La tige de commande de frein est destinée à être retenue à l'intérieur de cette cavité tout en étant susceptible de basculer par rapport à l'axe du servomoteur.

Pour retenir la tige de commande de frein à l'intérieur du servomoteur, une rotule formée par la tige de commande frein peut être fixée dans le distributeur par sertissage de la cavité sur la rotule. On entend par sertissage de la cavité sur la rotule le fait que la cavité retient la rotule à l'intérieur du servomoteur suite à un rétrécissement localisé de la cavité de manière à empêcher la rotule de sortir de la cavité en direction de la pédale de frein. Ce rétrécissement localisé de section de la cavité peut être en général situé à un endroit proche d'une jonction entre la rotule et une tige formée par la tige de commande de frein, la rotule et la tige étant destinées à être reliées fixement selon un axe du servomoteur.

Or, une fois en place à l'intérieur de la cavité du distributeur, la tige de commande de frein peut être amenée à réaliser à l'intérieur de la cavité des déplacements longitudinaux par rapport à l'axe du servomoteur. Ces déplacements longitudinaux de la tige de commande de frein peuvent être à l'origine de la formation de jeux. La rotule peut se déplacer dans la cavité depuis un endroit correspondant au rétrécissement localisé de section de cette même cavité jusqu'à un fond de la cavité longitudinalement par rapport à l'axe du servomoteur. On entend par fond de la cavité un endroit de la cavité le plus éloigné de la pédale de frein et où est destinée à s'appuyer en premier la rotule de la tige de commande de frein par rapport à l'axe du servomoteur.

Ces déplacements de la tige de commande de frein à l'intérieur de la cavité du distributeur peuvent être à l'origine d'une perte d'efficacité de freinage du fait d'un mauvais maintien de la tige de commande de frein à l'intérieur de la cavité du distributeur. De plus, ces derniers déplacements peuvent également être à l'origine de bruits désagréables pour le conducteur.

Pour obtenir un maintien sans jeux de la tige de commande de frein à l'intérieur de la cavité du distributeur, l'invention prévoit de fabriquer un distributeur de telle manière que la surface délimitée par la cavité du distributeur est au moins partiellement moulée sur une portion correspondante d'une superficie délimitée par la rotule. La cavité est moulée sur la rotule de telle manière que la tige de commande de frein est retenue à l'intérieur du servomoteur tout en étant en appui contre une portion de surface moulée de la cavité et contre le fond de la cavité longitudinalement par rapport à l'axe du servomoteur. La cavité est également moulée sur la rotule de telle manière que la tige de commande de frein est retenue à l'intérieur du servomoteur tout en étant susceptible de s'incliner par rapport à l'axe du servomoteur et autour de ce même axe.

Pour réaliser ce moulage, le distributeur comporte au moins une partie fabriquée en plastique, laquelle partie en plastique est destinée à être partiellement moulée sur une portion correspondante de la superficie délimitée par la rotule.

Le distributeur peut former un premier élément et un deuxième élément depuis la pédale de frein jusqu'au dispositif de freinage tout en délimitant la cavité. Le premier élément est fabriqué en matière plastique et le deuxième élément est fabriqué en matière acier. Le premier élément peut alors être réalisé par injection de matière tout en étant partiellement moulé sur une portion de la superficie délimitée par la rotule. Le deuxième élément peut alors être réalisé par décolletage de la matière tout en réalisant une surface destinée à recevoir une autre portion de superficie de la rotule en correspondance. On entend par décolletage de la matière le fait d'usiner directement à partir d'une barre cylindrique métallique. L'avantage du procédé par frappage de la matière est qu'il s'agit d'un procédé peut coûteux et peut ainsi diminuer notablement le coût de fabrication d'un tel distributeur.

Dans une autre variante, le distributeur peut former une partie monobloc en matière plastique de telle manière que le distributeur est entièrement fabriqué par frappage de la matière.

L'invention a donc pour objet un servomoteur d'assistance pneumatique de freinage d'un véhicule comportant un distributeur muni d'une cavité, laquelle cavité délimite une surface destinée à recevoir une rotule d'une tige de commande frein selon un axe du servomoteur, caractérisé en ce que
- au moins une portion de la surface de la cavité du distributeur est destinée à être moulée sur une portion correspondante d'une superficie délimitée par la rotule de la tige de commande de frein, et
- la rotule est retenue à l'intérieur de la cavité tout en étant susceptible de s'incliner par rapport à l'axe du servomoteur et tout en étant en appui contre la portion de surface moulée de la cavité et contre un fond de la cavité, longitudinalement par rapport à l'axe du servomoteur.
   Pour monter la tige de commande frein à l'intérieur du servomoteur, l'invention a également pour objet un procédé de montage de montage d'une tige de commande de frein dans un servomoteur d'assistance pneumatique de freinage d'un véhicule, lequel servomoteur comportant un distributeur muni d'une cavité, laquelle cavité délimite une surface destinée à recevoir une rotule de la tige de commande frein selon un axe du servomoteur, caractérisé en ce que
- on place la tige de commande de frein dans la cavité, et
- on moule au moins une portion de la surface de la cavité sur une portion correspondante d'une superficie délimitée par la rotule de la tige de commande de frein.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un servomoteur, selon l'invention ;
- Figure 2 : une représentation schématique d'un distributeur, selon l'invention ;
- Figure 3 : une représentation schématique d'un distributeur, selon une variante de l'invention, et
- Figure 4 : une représentation schématique d'une tige de commande de frein munie d'un insert, selon l'invention, et
- Figure 5 : une représentation schématique d'une variante d'un insert, selon l'invention, et
- Figure 6 : une représentation schématique d'un servomoteur, selon une variante de l'invention ;

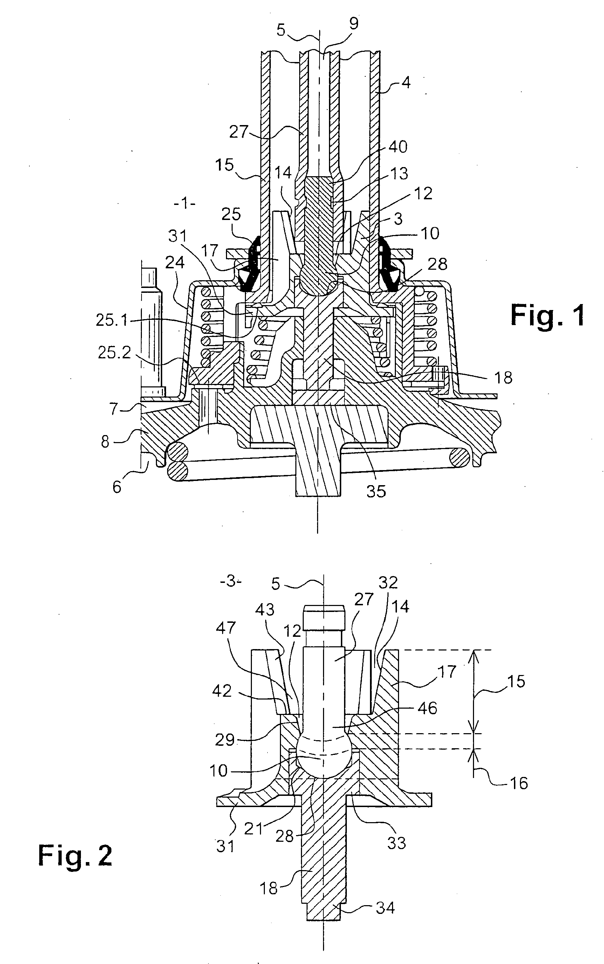

La figure 1 illustre un servomoteur d'assistance pneumatique de freinage 1 d'un véhicule comportant un distributeur 3, selon l'invention.

Dans cet exemple figure 1, le servomoteur 1 peut être un servomoteur simple ou bien un servomoteur tandem.

Dans le cas d'un servomoteur simple, le servomoteur comporte depuis une pédale de frein (non représentée) jusqu'à un dispositif de freinage (non représenté), une chambre avant 6 et une chambre arrière 7 séparée par une jupe piston 8 étanche. Dans le cas d'un servomoteur tandem, le servomoteur comporterait depuis la pédale de frein jusqu'au dispositif de freinage une première chambre avant et une première chambre arrière montées en série avec une deuxième chambre avant et une deuxième chambre arrière (non représentées). La chambre avant 6 est destinée à être remplie d'un volume d'air sous vide et la chambre arrière 7 est destinée à recevoir par intermittence un volume de fluide haute pression. La jupe piston 8 est reliée au piston pneumatique 4 de telle manière que l'enfoncement du piston pneumatique 4 longitudinalement par rapport à l'axe 5 du servomoteur et en direction du dispositif de freinage entraîne également l'enfoncement d'une telle jupe piston 8 selon cette même direction. La plaque jupe rigide est reliée perpendiculairement à l'axe 5 du servomoteur depuis une paroi 24 de ce servomoteur jusqu'au piston pneumatique 4. On entend par paroi 24 du servomoteur, une cloison externe qui délimite le servomoteur dans l'espace.

Le distributeur 3 est destiné à coulisser longitudinalement par rapport à l'axe 5 du servomoteur et par rapport au piston pneumatique 4, lequel piston pneumatique 4 est également destiné à coulisser longitudinalement par rapport à l'axe 5 du servomoteur et par rapport au distributeur 3. Plus précisément, le distributeur 3 est destiné à recevoir une tige de commande frein 9. La tige de commande de frein 9 comporte longitudinalement sur le joint 25 par rapport à l'axe 5 du servomoteur depuis la pédale de frein jusqu'au dispositif de freinage une tige 27 et une rotule 10. La tige de commande 9 peut être formée en une seule partie avec la tige 27 qui le prolonge par la rotule 10. Ou bien dans un mode préféré de l'invention, la tige de commande 9 peut être formée en une première partie ou tige 27 et en une deuxième partie ou rotule 10. Dans ce cas, la tige 27 et la rotule 10 sont reliées entre elles fixement selon l'axe 5 du servomoteur.

La tige de commande de frein 9 permet au distributeur 3 de s'enfoncer en direction du dispositif de freinage du véhicule longitudinalement par rapport à l'axe 5 du servomoteur 1. En s'enfonçant en direction du dispositif de freinage du véhicule, le distributeur 3 permet indirectement au véhicule de freiner au moins une roue du véhicule.

Plus particulièrement, le distributeur 3 est creusé d'une cavité 12 selon l'axe 5 du servomoteur. La cavité 12 est destinée à accueillir la rotule de la tige de commande de frein 9 tout en retenant cette même rotule à l'intérieur du servomoteur. Cette cavité 12 délimite une surface 14.

Selon l'invention, au moins une portion 16 de la surface 14 de la cavité 12 du distributeur 3 est moulée sur une portion correspondante d'une superficie délimitée par la rotule 10. Dans l'exemple préféré, figure 2, la portion moulée 16 est placée à un endroit situé en regard de la rotule 10 à proximité d'une jonction 46 entre la tige 27 et la rotule 10 de la tige de commande de frein 9. Le distributeur 3 est moulé sur la rotule 10 de telle manière que la tige de commande de frein 9 est retenue à l'intérieur de la cavité 12 tout en étant en appui contre un fond 28 de la cavité et contre la portion de surface moulée 16 de la cavité 12 longitudinalement par rapport à l'axe 5 du servomoteur. Le fond 28 de la cavité correspond à un endroit de la surface 14 de la cavité 12 le plus éloigné de la pédale de frein et contre lequel la tige de commande de frein 9 est destinée à s'appuyer en premier par rapport à l'axe 5 du servomoteur. La tige de commande de frein 9 est également retenue à l'intérieur de la cavité 12 de telle manière que la tige de commande de frein 9 peut s'incliner par rapport à l'axe 5 du servomoteur dans un même plan passant par l'axe 5 du servomoteur ou tout au tour de l'axe 5 du servomoteur.

Dans un exemple, la tige de commande de frein 9 est retenue dans la cavité 12 pour de forces d'arrachement exercées en direction opposée au dispositif de freinage au moins supérieures à une force exercée par une canne d'antivol destinée à être attaché par un conducteur entre un volant du véhicule et la pédale de frein.

Plus particulièrement, le moulage du distributeur 3 sur la tige de commande de frein 9 est réalisé de telle manière que la cavité 12 délimite un rétrécissement de section localisé à un endroit de la rotule 10, lequel endroit est situé à proximité d'une jonction 46 entre la tige 27 et la rotule 10 de la tige de commande 9. Ce rétrécissement de section est réalisé de telle manière que la rotule 10 est placée en appui contre la portion de surface moulée 16 de la cavité 12 et contre le fond 28 de cette même cavité 12 longitudinalement par rapport à un axe 5 du servomoteur.

La cavité 12 est également réalisée de telle manière qu'elle délimite une forme globalement conique, de conicité orientée vers le dispositif de freinage. La cavité 12 délimite une autre portion 15 de la surface 14 destinée à être en regard de la tige 27 de la tige de commande de frein 9. Cette portion 15 permet de délimiter un espace 47 permettant de guider la tige de commande de frein lors de son inclinaison par rapport à l'axe 5 du servomoteur. Plus particulièrement, cette portion 15 peut former une interruption de surface 42 permettant de délimiter de part et d'autre de cette interruption une première partie 43 et une deuxième partie 29 depuis la pédale de frein jusqu'au dispositif de freinage. La première partie 43 correspond à une portion de surface de la surface 14 placée au regard de la tige 27 entre la pédale de frein et l'interruption de surface 42. La deuxième partie 29 est placée entre l'interruption de surface 42 et un endroit de la surface 14 situé en regard de la jonction 46 entre la tige 27 et la rotule 10. La première partie 43 et la deuxième partie 29 peuvent former chacune un plan incliné par rapport à l'axe 5 du servomoteur. L'inclinaison du plan de la deuxième partie 29 par rapport à l'axe 5 du servomoteur est réalisé de telle manière que la tige 27 puisse venir en appui contre la deuxième partie 29 lors de son basculement par rapport à l'axe 5 du servomoteur. Cette deuxième partie 29 délimite alors plus particulièrement un espace guidant la tige de commande de frein 9 lors de son inclinaison par rapport à l'axe 5 du servomoteur.

Le distributeur 3 est creusé d'au moins une rainure 32 en direction du dispositif de freinage et longitudinalement par rapport à l'axe 5 du servomoteur. Cette rainure 32 est formée à un endroit du distributeur 3 placé au regard de la tige 27 de la tige de commande de frein. Cette rainure 32 permet d'alléger le poids du distributeur et permet également de libérer une section de passage à l'administration d'air dans la chambre arrière.

Dans un mode préféré de l'invention, figure 2, le distributeur 3 forme un premier élément 17 et un deuxième élément 18 depuis la pédale de frein jusqu'au dispositif de freinage. Le premier élément 17 et le deuxième élément 18 s'associent l'un avec l'autre pour former la cavité 12 comme précédemment mentionnée. Le premier élément 17 peut être fabriqué en matière plastique et le deuxième élément 18,peut être fabriqué en acier de telle manière qu'il est possible de travailler le premier élément 17 par injection de la matière et le deuxième élément par décolletage de la matière. Comme précédemment mentionné, on entend par décolletage de la matière le fait d'usiner directement à partir d'une barre cylindrique métallique.

Le premier élément 17 est destiné à être moulé sur la rotule 10. Le premier élément 17 s'étend à un endroit perpendiculairement par rapport à l'axe 5 du servomoteur pour former une collerette 31 au moins partiellement annuaire. Cette collerette 31 est destinée à venir au contact d'un premier siège 25.1 formant une valve d'admission de fluide du servomoteur. Une valve d'admission de fluide permet d'autoriser une première communication entre une source de fluide propulseur et une chambre arrière 7 du servomoteur. Une source de fluide propulseur peut être par exemple de l'air à la pression atmosphérique. La valve d'admission de fluide permet également d'autoriser une deuxième communication entre la chambre arrière 7 et la chambre avant 6. Pour ce faire, La jupe piston 8 est également destiné à venir en appui contre un deuxième siège. La valve est réalisée de telle manière qu'au repos, lorsque le conducteur n'appuie pas sur la pédale de frein, la première communication entre la source de fluide propulseur et la chambre arrière 7 est coupée et la deuxième communication entre la chambre arrière 7 et la chambre avant 6 peut également être coupée. La première communication est coupée suite à l'appui du premier siège 25.2 contre une surface correspondante de la jupe piston 8 selon une direction depuis la pédale de frein jusqu'au dispositif de freinage, . La deuxième communication est également coupée suite à l'appui du deuxième siège 25.1 sur la surface correspondante du piston pneumatique 4.

Suite à un enfoncement de la pédale de frein en direction du dispositif de freinage lors d'un freinage du véhicule, le piston pneumatique 4 et le distributeur 3 sont destinés à coulisser l'un par rapport à l'autre de telle manière que la valve d'admission de fluide admette temporairement une entrée de fluide entre l'extérieur du servomoteur et la chambre arrière 7 puis entre la chambre arrière 7 et la chambre avant 6. L'ouverture de la première communication entre l'extérieur du servomoteur et la chambre arrière 7 s'effectue suite à un écartement longitudinal du distributeur 3 par rapport au piston 4 et par rapport à l'axe 5 du servomoteur. Plus particulièrement, l'ouverture de la première communication entre l'extérieur du servomoteur et la chambre arrière 7 s'effectue suite à un écartement longitudinal de la collerette 31 par rapport au piston 4 et par rapport à l'axe 5 du servomoteur.

Le fluide haute pression peut pénétrer dans la chambre arrière 7 entre le premier siège 25.1 et la collerette 31. La différence de pression entre la chambre arrière 7 et la chambre avant 6 entraîne un déplacement longitudinal du piston pneumatique 4 par rapport au distributeur 3 et par rapport à l'axe 5 du servomoteur. Le piston pneumatique 4 se détache du deuxième siège 25.2 alors que le premier siège 25.1 se positionne à nouveau en appui contre la collerette 31. Le fluide peut pénétrer depuis la chambre arrière 7 jusque dans la chambre avant 6 entre le deuxième siège 25.2 et la collerette 31.

Le deuxième élément 18 comporte une première extrémité 33 et une deuxième extrémité 34 depuis la pédale de frein jusqu'au dispositif de freinage. La première extrémité 33 forme le fond 28 de la cavité 12. Le fond 28 peut être réalisé par décolletage de manière à réaliser une forme s'adaptant à la forme de la rotule 10. La deuxième extrémité 34 forme une protubérance allongée selon l'axe 5 du servomoteur, laquelle protubérance est destinée à venir se plaquer contre un disque de réaction 35, lequel disque de réaction 35 est indirectement relié à un maître cylindre (non représenté) du véhicule, figure 1.

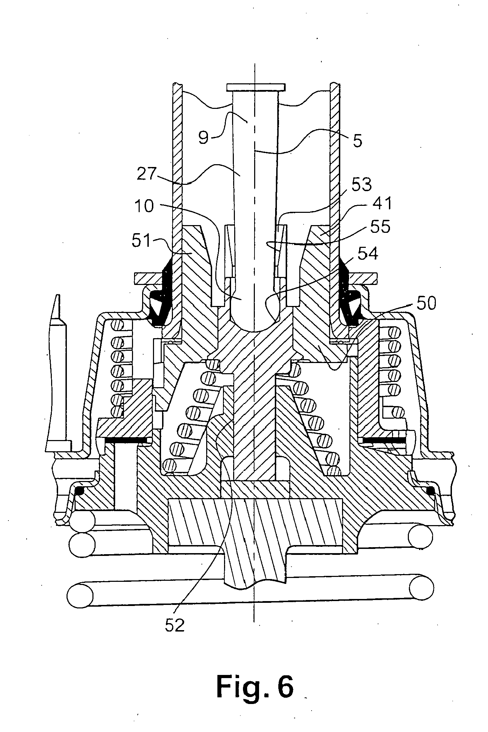

Dans une variante figure 6, le distributeur 3 forme une première partie 41 et une deuxième partie 52. La première partie 41 est fabriquée en matière plastique et la deuxième partie 52 est fabriquée en acier. La première partie 41 est moulée sur la deuxième partie 52. La deuxième parie 52 est obtenue par décolletage de la matière. Cette deuxième partie 52 est creusée d'un orifice formant un conduit 53. Ce conduit 53 présente à un endroit destiné à recevoir la rotule 10 de la tige de commande de frein 9 une surface de réception 54 dont la forme est réalisée pour que la rotule 10 s'y adapte. Ce conduit 53 présente également à un endroit proche de la tige 27 de la tige de commande 9 une surface 55 légèrement inclinée en direction opposée à l'axe 5 du servomoteur. Cette surface inclinée 55 autorise la tige de commande de frein à s'incliner par rapport à l'axe 5 du servomoteur. Cette surface inclinée 55 limite également l'inclinaison de cette tige de commande de frein. La première partie 41 est avantageusement partiellement moulée sur la deuxième partie 52 de manière à diminuer une quantité de matière nécessaire pour fabriquer ce distributeur. Cette première partie 41 délimite une première portion 50 destinée à être moulée sur la deuxième partie 52 et une deuxième portion 51 non moulée et formant une collerette 51.

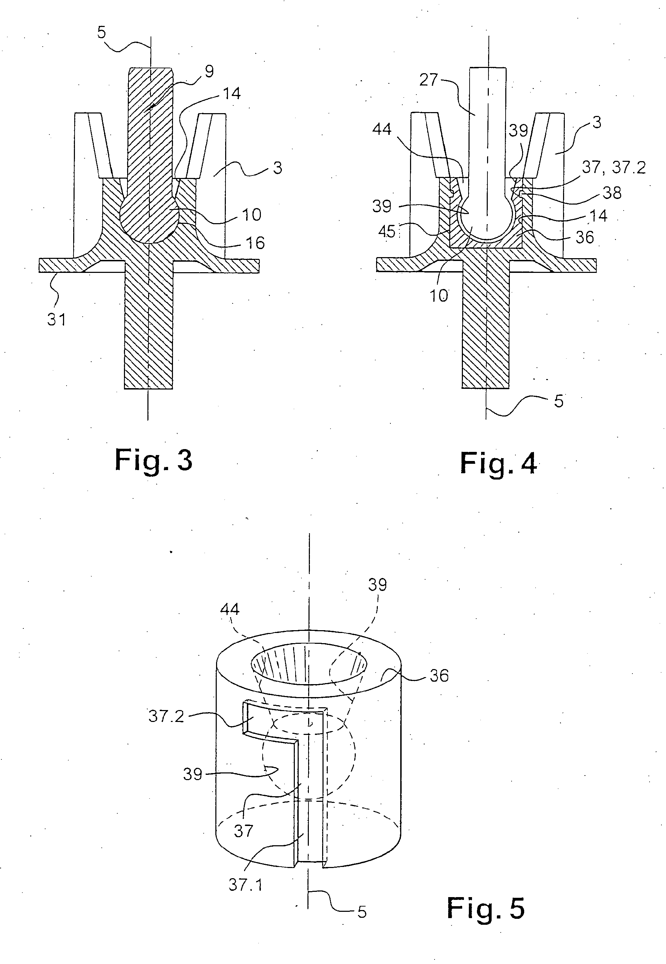

Dans une autre variante de l'invention, figure 3, le distributeur 3 forme un seul bloc ou monobloc fabriqué en matière plastique de telle manière qu'il est possible de réaliser un tel distributeur par frappage de la matière et par moulage d'au moins une portion 16 de la surface interne 14 du distributeur.

Le moulage de la .surface 14 sur la rotule 10 est réalisé de telle manière que la rotule 10 peut glisser sur la surface moulée de la cavité 12. Pour faciliter le glissement de la rotule 10 à l'intérieur de la cavité 12, de l'huile peut être déposée dans la cavité 12 et sur la rotule 10 préalablement à l'insertion de la tige de commande de frein 9 dans la cavité 12 du distributeur 3. Le distributeur 3 peut également être chargé avec un agent lubrifiant

Dans une variante de l'invention figure 4, un insert 36 peut être placé entre le distributeur 3 et la rotule 10 de cette même tige de commande de frein 9. Cet insert 36 est positionné de telle manière qu'il est directement moulé sur la rotule 10 de la tige de commande de frein 9 tout en autorisant l'inclinaison de la tige de commande de frein par rapport à l'axe 5 du servomoteur. Pour faciliter le moulage, l'insert peut être fabriqué en matière plastique ou une autre matière autorisant un tel moulage. L'insert comporte parallèlement à l'axe 5 du servomoteur une face interne 39 et une face externe 45. La face interne 39 est destinée à être proche de l'axe 5 du servomoteur tout en délimitant une cavité 44 de l'insert. La face externe 45 est destinée à être éloignée de l'axe 5 du servomoteur tout en étant destiné à être placée au regard de la surface 14 de la cavité 12 du distributeur.

La face interne 39 est destinée à être au moins partiellement moulée sur une portion correspondante de la superficie de la rotule 10 de telle manière que l'insert 36 autorise un mouvement d'inclinaison de la tige de commande de frein 9 par rapport à l'axe 5 du servomoteur. L'insert 36 comporte également une portion de surface 39 de la face interne 39 destinée à être au regard de la tige 27 de la tige de commande de frein 9, à proximité de la jonction 46 de la tige 27 et de la rotule 10. Cette portion de surface 39 comporte un plan incliné par rapport à l'axe 5 du servomoteur de telle manière que cette portion de surface 39 délimite un espace 44 guidant la tige de commande de frein 9 lors de son basculement par rapport à l'axe 5 du servomoteur.

L'insert 36 peut être inséré dans la cavité 12 par encastrement. Pour ce faire, l'insert 36 possède une forme cylindrique circulaire et au moins un moyen 37 pour s'encastrer dans le distributeur 3, figure 5. Le moyen 37 pour s'encastrer de l'insert peut former une cannelure 37 creusée sur la face externe 45 de l'insert 36. Cette cannelure 37 peut être réalisée selon un premier tronçon 37.1 et selon un deuxième tronçon 37.2, le premier tronçon et le deuxième tronçon étant destinés à être creusés l'un à la suite de l'autre. Le premier tronçon 37.1 est creusé longitudinalement par rapport à l'axe 5 du servomoteur. Le deuxième tronçon 37.2 peut être creusé perpendiculairement par rapport à l'axe 5 du servomoteur. La surface 14 de la cavité 12 du distributeur peut comporter en correspondance une saillie 38 destinée à retenir l'insert 36 dans la cavité 12 du distributeur 3 tout en venant coopérer avec l'insert 36 pour se loger dans la cannelure 37 de l'insert 36. Il suffit alors d'insérer l'insert 36 en positionnant la saillie 38 dans le premier tronçon 37.1 selon une direction longitudinale par rapport à l'axe 5 du servomoteur. Puis il suffit de réaliser une légère rotation de l'insert 36 par rapport à l'axe 5 du servomoteur et par rapport au distributeur de telle manière que la saillie 38 vienne se loger dans le deuxième tronçon 37.2. La figure 4 représente, entre autres, le deuxième tronçon 37.2 selon une coupe longitudinale du distributeur 3.

L'insert 36 peut également être inséré par collage dans la cavité 12. Dans ce cas, l'insert 36 peut posséder une forme cylindrique circulaire ou une forme cylindrique rectangulaire. Et enfin, l'insert 36 peut être inséré par usinage puis collage dans la cavité 12.

Le procédé de montage d'une telle tige de commande de frein 9 dans un servomoteur d'assistance pneumatique de freinage est la suivante. La tige de commande de frein 9 est d'abord insérée dans la cavité 12 du distributeur par sa rotule 10. Puis, une portion de la surface 14 de la cavité 12 destinée à être en regard de la rotule 10 est au moins partiellement moulée sur la superficie de la rotule 10. Dans un mode de préféré de l'invention où la tige de commande 9 est formée en deux parties par la tige 27 et par la rotule 10 reliées entre elles fixement, la rotule 10 peut d'abord être placée dans la cavité 12. La tige de commande en deux parties présente l'avantage de faciliter le montage de cette même tige de commande 9. De l'espace est libéré et permet de faciliter le moulage de la cavité 12 sur la rotule. Puis la rotule 10 peut être reliée à la tige 27 par sertissage de la tige 27 sur la rotule 10 ou inversement.

La tige de commande de frein peut être reliée fixement à la rotule par sertissage de la tige sur la rotule. Pour se faire, la tige peut former un tube cylindrique creux et la rotule 10 peut former à un endroit proche de la pédale de frein et longitudinalement par rapport à l'axe 5 du servomoteur une queue 40 destinée à s'insérer dans le tube creux de la tige. Puis la tige est sertie sur la queue 40 par compression localisée de la matière formée par la tige en direction de l'axe 5 du servomoteur pour que la portion de la tige compressée vienne se placer dans une gorge 13 au moins partiellement annulaire creusée dans la queue 40 de la rotule.10 Ce sertissage de la tige 27 avec la rotule 10 est réalisé de telle manière que la tige 27 et la rotule 10 sont reliées fixement et longitudinalement par rapport à l'axe 5 du servomoteur.

## Revendications

1. - Servomoteur d'assistance pneumatique de freinage (1) d'un véhicule comportant un distributeur (3) muni d'une cavité (12), laquelle cavité délimite une surface (14) destinée à recevoir une rotule (10) d'une tige de commande frein (9) selon un axe (5) du servomoteur, **caractérisé en ce que**
- au moins une portion (16) de la surface de la cavité du distributeur est destinée à être moulée sur une portion correspondante d'une superficie (28) délimitée par la rotule de la tige de commande de frein, et
- la rotule est retenue à l'intérieur de la cavité tout en étant susceptible de s'incliner par rapport à l'axe du servomoteur et tout en étant en appui contre la portion de surface moulée de la cavité et contre un fond de la cavité, longitudinalement par rapport à l'axe du servomoteur.

2. - Servomoteur selon la revendication 1, **caractérisé en ce que** la cavité (12) comporte une forme globalement conique.

3. - Servomoteur selon l'une des revendications 1 à 2, **caractérisé en ce que**
- la tige de commande de frein forme depuis une pédale de frein jusqu'à un dispositif de freinage, une tige (27) et une rotule (10), laquelle tige et laquelle rotule sont reliées entre elles fixement et longitudinalement par rapport à l'axe du servomoteur,
- le distributeur est creusé d'au moins une rainure (32) longitudinalement par rapport à l'axe du servomoteur, à un endroit proche de la pédale de frein et destiné à être au regard de la tige (27) de la tige de commande de frein (9).

4. - Servomoteur selon l'une des revendications 1 à 3, **caractérisé en ce que**
- le distributeur (3) est formé par un premier élément (17) et par un deuxième élément (18) selon une direction depuis une pédale de frein jusqu'à un dispositif de freinage, le premier élément et le deuxième élément étant reliés entre eux fixement tout en délimitant la cavité (12),
- le premier élément est fabriqué en matière plastique et est destiné à être moulé sur la rotule de la tige de commande de frein, et
- le deuxième élément est fabriqué en acier.

5. - Servomoteur selon l'une des revendications 1 à 3, **caractérisé en ce que**
- lé distributeur est formé par une première partie (41) et par une deuxième partie (52), la deuxième partie recevant la tige de commande de frein,
- première partie est fabriquée en matière plastique et est moulée sur la deuxième partie, et
- la deuxième partie est fabriquée en acier.

6. - Servomoteur selon l'une des revendications 1 à 3, **caractérisé en ce que** le distributeur est formé en un seul bloc et en matière plastique.

7. - Servomoteur selon l'une des revendications 1 à 6, **caractérisé en ce que** la rotule (10) de la tige de commande de frein (9) est destinée à être insérée dans la cavité (12) du distributeur par l'intermédiaire d'un insert (36).

8. - Servomoteur selon la revendication 7, **caractérisé en ce que** l'insert est moulé sur la rotule.

9. - Servomoteur selon l'une des revendications 7 à 8, **caractérisé en ce que** l'insert est moulé dans la cavité (12).

10. - Servomoteur selon l'une des revendications 7 à 8, **caractérisé en ce que** l'insert est encastré dans la cavité (12).

11. - Procédé de montage d'une tige de commande de frein dans un servomoteur d'assistance pneumatique de freinage (1) d'un véhicule, lequel servomoteur comportant un distributeur (3) muni d'une cavité (12), laquelle cavité délimite une surface (14) destinée à recevoir une rotule (10) de la tige de commande frein (9) selon un axe (5) du servomoteur, **caractérisé en ce que**
- on place la tige de commande de frein dans la cavité (12), et
- on moule au moins une portion (16) de la surface (14) de la cavité sur une portion correspondante d'une superficie (28) délimitée par la rotule de la tige de commande de frein.

12. - Procédé de montage selon la revendication 11, **caractérisé en ce que**
- on place la rotule (10) de la tige de commande de frein (9) dans la cavité,
- puis on relie une tige (27) de la tige de commande de frein (9) à la rotule.

13. - Procédé de montage selon l'une des revendications 11 à 12, **caractérisé en ce que**
- on moule un insert (36) sur la rotule (10) de la tige de commande de frein, puis .
- on place l'insert muni de la rotule dans la cavité (12) du distributeur (3).

14. - Procédé de montage selon la revendication 13, **caractérisé en ce que**
- on moule la cavité sur l'insert.

15. - Procédé de montage selon la revendication 13, **caractérisé en ce que**
- on encastre l'insert dans la cavité.
